# NEUE EUROPÄISCHE PATENTSCHRIFT

(11) **EP 0 187 378 B2**
(45) Veröffentlichungstag und Bekanntmachung des Hinweises auf die Entscheidung über den Einspruch: **04.10.2000**
(45) Hinweis auf die Patenterteilung: 10.07.1991
(21) Anmeldenummer: 85116564.7
(22) Anmeldetag: 24.12.1985
(51) Int. Cl.: F16K 31/68, F16K 11/00

(54) **Thermostatventil**
Thermostatic valve
Soupape thermostatique

(30) Priorität: 02.01.1985 FI 850005
(43) Veröffentlichungstag der Anmeldung: 16.07.1986
(73) Patentinhaber: ORAS OY, 26100 Rauma10 (FI)
(72) Erfinder: Määttänen, Ari-Esa Johannes, SF-27100 Eurajoki (FI); Rapala, Olle Einari, SF-26100 Rauma (FI)
(74) Vertreter: TER MEER STEINMEISTER & PARTNER GbR

(56) Entgegenhaltungen:
- CH-A- 557 492
- DE-A- 1 675 525
- DE-U- 1 921 797
- DE-U- 1 991 296
- US-A- 3 019 986

## Beschreibung

Die vorliegende Erfindung betrifft ein Mischventil und dem Oberbegriff des Anspruchs 1.

Ein Thermostatventil der eingangs genannten Art ist aus der DE-OS 22 31 524 bekannt. Bei der bekannten Vorrichtung erfolgt die ringförmige Abdichtung zwischen dem Ventilkörper und dem Regelglied mit Hilfe von O-Ringen. In das Innere des Regelgliedes ist eine Druckfeder eingelassen, die mit dem Thermostaten des Thermostatventils zusammenwirkt. Einer der beiden Wasserströme, also etwa das Heißwasser, wird durch im Umkreis der Druckfeder liegende Kanäle durch das Regelglied hindurch in eine Mischkammer für die beiden Wasserströme geführt.

Ein schwerwiegender Mangel eines solchen Thermostatventils besteht darin, dass sich mit der Ablagerung von Leitungswasserkalk in diesen engen Zwischenräumen die Funktionstüchtigkeit des Ventils verschlechtert und dieses schliesslich sogar unbrauchbar wird. Schon geringe Ansammlungen von Verunreinigungen beeinträchtigen das Ventil in seiner Funktion.

Aus der offengelegten FI-Patentanmeldung 3033/73 (=CH-A-557492) ist vom Pressostatventil her bekannt, mit einer abdichtenden elastischen Gummimembran zu arbeiten, die als Dichtung zwischen dem beweglichen Regelglied und einer dieses umgebenden verschiebbaren Hülse fungiert. Dieses bereits bekannte Ventil hat zwei sich separat bewegende Regelglieder sowie bei beiden je eine solche Membran und Druckkompensation, wobei die Membran die ausflussseitige Kammer und die mit kalibrierter Ausflussöffnung versehene Ausgleichskammer voneinander trennt.

Aus der DE-U-1 921 797 ist ein Mischventil mit Thermostat bekannt, wobei letzterer auf ein axial bewegbares, in einem Ventilgehäuse angeordnetes Regelglied wirkt.

Aus der DE-A-1 675 525 ist eine Druckausgleichsvorrichtung für Mischarmaturen bekannt, bei der sowohl das Kaltwasser, als auch das Warmwasser durch die Druckausgleichsvorrichtung hindurchtreten, ohne daß es zu einer Vermischung kommt. Das Kaltwasser und das Warmwasser werden nämlich nach dem Durchtritt durch die Druckausgleichsvorrichtung in getrennten Leitungen weitergeführt.

Mit der vorliegenden Erfindung soll nun ein Thermostatventil geschaffen werden, bei dem durch Einsatz einer elastischen Membran eine besonders einfache und wirtschaftlich vorteilhafte Konstruktion erzielt und gleichzeitig der vorgenannte durch Kalkablagerung bedingte Mangel vermieden wird.

Mit der vorliegenden Erfindung soll ein ansonsten auf diese bekannte Weise funktionierendes Thermostatventil geschaffen werden, bei dem die Abdichtung zwischen beweglichem Regelglied und Ventilkörper so konzipiert ist, dass sich aus einer Kalkablagerung kein nennenswerter Nachteil ergibt.

Die zuvor angegebene Aufgabe wird durch die im Anspruch 1 angegeben Merkmale gelöst.

Im Hinblick auf die Verwirklichung dieser Zielsetzung ist für die Erfindung charakteristisch, dass die Abdichtung des Regelgliedes gegenüber dem umgebenden Ventilkörper durch eine am Regelglied und am Ventilkörper befestigte elastische ringförmige Membran erfolgt, welche die erforderlichen Regelgliedbewegungen erlaubt und gleichzeitig das zufliessende kalte und heisse Wasser voneinander trennt. Das erfindungsgemässe Ventil hat somit keine Reibungsflächen und wird auch durch Verunreinigungen nicht in seiner Funktion beeinträchtigt.

Durch passende Bemessung von Membran und Regelglied lässt es sich so einrichten, dass eventuelle Wasserdruckstösse eine Drosselung auf der Seite des höheren Drucks bewirken. Die erfindungsgemässe Konstruktion kann somit teilweise auch als Pressostat fungieren.

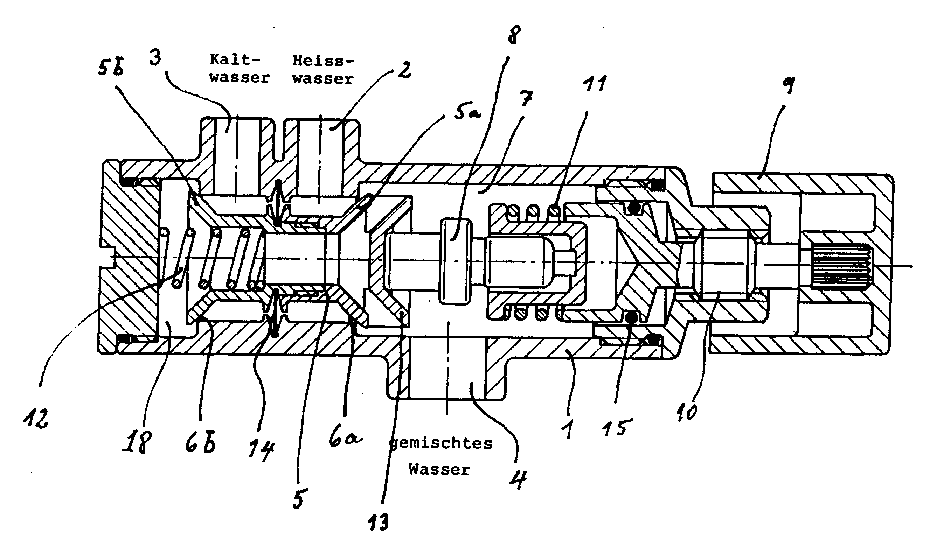

Die Erfindung sowie ihre übrigen Merkmale und Vorteile werden im folgenden in Form eines Beispiels und unter Hinweis auf die beigefügte Zeichnung, die ein längs aufgeschnittenes erfindungsgemässes Thermostatventil zeigt, im einzelnen beschrieben.

In der Zeichnung ist der zylindrische Körper des Ventils allgemein durch die Zahl 1 bezeichnet. Die Bezugszahlen 2 und 3 bezeichnen die nebeneinander angeordneten Zuflussstutzen für Heiss- und Kaltwasser. Die Ausflussöffnung 4 für das gemischte Wasser ist in der Mitte am Unterteil des Ventils angeordnet. Die Zahl 5 bezeichnet das sich im Ventilkörper kolbenartig axial bewegende Regelglied.

Das Regelglied hat im wesentlichen die Form einer Zwirnsrolle und ist an seinen Enden mit schräg nach aussen gerichteten Flanschen 5a und 5b versehen, die zusammen mit dem Ventilkörper ringförmige Drosselöffnungen 6a und 6b für Heiss- und für Kaltwasser bilden. Auf das linke Ende des Regelgliedes 5 wirkt die Schraubenfeder 12, auf sein rechtes Ende das Thermostatglied 8, das auf bekannte Weise bei sinkender Temperatur axial schrumpft und bei steigender Temperatur sich axial ausdehnt. Die Stellung des Thermostatglieds 8 lässt sich ausserdem über den Drehknopf 9 beeinflussen, dessen Spindel über das in den Ventilkörper eingreifende Gewinde 10 das Thermostatglied 8 bei Drehen des Knopfes verschiebt. Um das Thermostatglied 8 vor Beschädigung zu schützen ist an seiner Halterung eine im Vergleich zur Feder 12 wesentlich steifere Feder 11 angebracht. Die Halterung ist ausserdem durch einen O-Ring 15 gegen den Ventilkörper 1 abgedichtet.

Wie dem Fachmann wohlbekannt ist, funktioniert das Ventil folgendermassen:
Heisswasser fliesst über die Zuflussöffnung 2 zu und gelangt durch die ringförmige Drosselöffnung 6a hindurch in die Mischkammer 7. Entsprechend fliesst Kaltwasser über die Zuflussöffnung 3 zu und gelangt durch die Drosselöffnung 6b hindurch in den am Ventilende befindlichen Raum 18 und von dort weiter durch das Regelglied 5 hindurch in die Mischkammer 7. Der Flansch 13 bewirkt, dass das zufliessende Kalt- und Heisswasser nicht direkt auf das Thermostatglied 8 treffen. Erreicht zum Beispiel das Wasser in der Mischkammer 7 eine zu hohe Temperatur, so dehnt sich das Thermostatglied 8 aus und reduziert die Heisswasser-Zuflussöffnung 6a. Sinkt die Temperatur des gemischten Wassers zu tief, wird entsprechend infolge Schrumpfung des Thermostatgliedes 8 und Verschiebens des Regelgliedes durch die Feder 12 nach rechts die Drosselöffnung 6b reduziert. Die Einstellung der gewünschten Wassertemperatur erfolgt auf bekannte Weise über den Drehknopf 9, und das gemischte Wasser fliesst über die Öffnung 4 aus.

Wesentlich ist bei der vorliegenden Erfindung die Abdichtung des Regelgliedes 5 zum Ventilkörper. Bewirkt wird diese Abdichtung durch eine elastische, z.B. aus Gummi bestehende Membran 14, die im dargestellten Beispiel die Form eines flachen Kreisrings hat. Ihre Befestigung am Regelglied 5 sowie am umgebenden Ventilkörper kann durch eine Verdickung, durch Vulkanisieren oder auf eine andere geeignete Weise erfolgen. Dank dieser Membran sind zwischen Regelglied und Ventilkörper keine kleinen, dichten, aber Bewegung zulassenden Spiele erforderlich.

Bei der in der Zeichnung gezeigten Ausführungsform ist die ringförmige Membran 14 mit ihren Rändern in eine V-förmige Vertiefung am Regelglied und entsprechend am Ventilkörper eingesetzt. Die Ausdehnung der Membran 14 in radialer Richtung ist grösser als die radiale Ausdehnung der Flansche 5a und 5b, gerechnet vom zylindrischen Regelglied-Mittelteil bis zu den Drosselöffnungen 6a und 6b. Dadurch bewirken auf der Heisswasser- oder Kaltwasserseite eventuell auftretende Druckstösse eine Bewegung des Regelgliedes in der Weise, dass sich die entsprechende Drosselöffnung 6a beziehungsweise 6b verengt. Das Regelglied fungiert also gleichzeitig teilweise als Pressostat.

## Patentansprüche

1. Mischventil mit Thermostat, das Zuflußöffnungen (2, 3) für Heiß- und Kaltwasser und ein in einem im Ventilkörper (1) befindlichen, länglichen Hohlraum kolbenartig beweglich angeordnetes, im wesentlichen spulenförmiges Regelglied (5) aufweist, das die eingestellte Menge Heiß- und Kaltwasser in die hinter dem Regelglied (5) angeordnete Mischkammer (7) und aus dieser in die Wasserausflußöffnung (4) fließen läßt, wobei auf das Regelglied (5) axial ein dem gemischten Wasser ausgesetztes Thermostatglied (8) wirkt und das Regelglied (5) so geformt ist, daß es bei seiner axialen Verschiebung den Öffnungsquerschnitt der Drosselöffnungen (6a, 6b) für Heiß- und Kaltwasser reguliert, und wobei zwischen dem Regelglied (5) und dem Ventilkörper (1) und außerdem zwischen der Heißwasserzuflußöffnung (2) und der Kaltwasserzuflußöffnung (3) eine abdichtende, ringförmige Dichtung vorgesehen ist, die Bewegungen des Regelgliedes (5) zuläßt und das Kaltwasser vom Heißwasser trennt, wobei das Regelglied (5) rohrförmig ist, ungefähr die Form einer Zwirnsrolle hat und Flansche (5a, 5b) aufweist, die schräg nach außen gerichtet sind;
wobei die Drosselöffnungen (6a, 6b) zwischen den der Dichtung zugewandten Flächen der Flansche (5a, 5b) und am Ventilkörper (1) befindlichen ringförmigen Schultern ausgebildet sind
daß die Membran (14) in eine V-förmige Vertiefung am Regelglied (5) und entsprechend am Ventilkörper (1) eingesetzt ist;
daß die radiale Ausdehnung der Membran (14) größer ist als die radiale Ausdehnung der Flansche (5a, 5b) vom zylindrischen Mittelteil des Regelgliedes (5) bis zu den Drosselöffnungen (6a, 6b);
und daß ein Flansch (13) ein Regelglied (5) vorgesehen ist, der bewirkt, daß das zufließende Kalt- und Heißwasser beim Eintritt in die Mischkammer (7) nicht direkt auf das Thermostatglied (8) trifft.

2. Mischventil mit Thermostat nach Anspruch 1, **dadurch** gekennzeichnet, dass das Regelglied (5) dergestalt zweiteilig konzipiert ist, dass beim Zusammenfügen der Teile der innere Rand der Membran (14) zwischen die Teile eingespannt wird.

## Claims

1. A mixing valve with a thermostat and having inlet apertures (2, 3) for hot and cold water and a substantially bobbin-shaped regulating member (5) disposed for piston-like movement in an elongated cavity disposed in the valve body (1), said regulating member allowing the set quantity of hot and cold water to flow into the mixing chamber (7) disposed on the downstream side of the regulating member (5) and out of the mixing chamber into the water outlet orifice (4), the regulating member (5) being acted upon axially by a thermostatic element (8) which is exposed to the mixed water, the regulating element (5) being so shaped that upon its axial displacement it regulates the opening cross-section of the regulating apertures (6a, 6b) for hot and cold water, there being provided between the regulating element (5) and the valve body (1) and furthermore between the hot water inlet aperture (2) and the cold water inlet aperture (3) a sealing-tight annular gasket which permits of movement of the regulating element (5) and isolates the cold water from the hot water, whereby the regulating member (5) is tubular, has approximately the form of a twine bobbin and comprises flanges (5a, 5b) which are directed obliquely outwardly, the throttle apertures (6a, 6b) being constructed between those faces of the flanges (5a, 5b) which are towards the gasket and annular shoulders which are provided on the valve body (1), characterised in that the gasket is an annular diaphragm (14), the diaphragm (14) is inserted into a V-shaped depression on the regulating member (5) and accordingly on the valve body 1; and in that the radial expansion of the diaphragm (14) is greater than the radial expansion of the flanges (5a, 5b) from the cylindrical central part of the regulating member (5) as far as the throttle apertures (6a, 6b) and in that a flange (13) is provided on the regulating member (5) the effect of which is that when it enters the mixing chamber (7), the incoming cold and hot water does not directly strike the thermostatic element (8).

2. A mixing valve with a thermostat according to claim 1, characterised in that the regulating element (5) is so designed in two parts that when the parts are joined, the inner edge of the diaphragm (14) is clamped between the parts.

## Revendications

1. Mitigeur avec thermostat, qui comporte des ouvertures d'alimentation (2, 3) pour l'eau chaude et l'eau froide, ainsi qu'un organe de réglage (5) essentiellement en forme de bobine, disposé en étant mobile à la manière d'un piston dans une cavité allongée se trouvant dans le corps de robinet (1) et qui laisse s'écouler la quantité réglée d'eau chaude et d'eau froide vers la chambre de mélange (7) située derrière l'organe de réglage (5) et de là vers l'ouverture de sortie d'eau (4), un organe thermostatique (8) exposé à l'eau mélangée agissant en direction axiale sur l'organe de réglage (5) qui est de forme telle que lors de son coulissement axial il régule la section de passage des ouvertures d'étranglement (6a, 6b) pour l'eau chaude et l'eau froide, une garniture d'étanchéité de forme annulaire étant prévue entre l'organe de réglage (5) et le corps de robinet (1) et en outre entre l'ouverture d'alimentation en eau chaude (2) et l'ouverture d'alimentation en eau froide (3) et autorisant des mouvements de l'organe de réglage (5) et séparant l'eau froide de l'eau chaude, l'organe de réglage (5) étant de forme tubulaire, présentant à peu près la forme d'une bobine de fil et comportant des flasques (5a, 5b) dirigées de manière inclinée vers l'extérieur, les ouvertures d'étranglement (6a, 6b) étant réalisées entre les surfaces des flasques (5a, 5b) tournées vers la garniture d'étanchéité et des épaulements annulaires se trouvant sur le corps de robinet (1), caractérisé en ce que la garniture d'étanchéité est une membrane (14) annulaire, en ce que la membrane (14) est logée dans une rainure en forme de "V" sur l'organe de réglage (5) et de manière correspondante sur le corps de robinet (1) ;
en ce que l'étendue radiale de la membrane (14) est supérieure à l'étendue radiale des flasques (5a, 5b), de la partie centrale cylindrique de l'organe de réglage (5) jusqu'aux ouvertures d'étranglement (6a, 6b) ;
et en ce qu'il est prévu sur l'organe de réglage (5) une flasque (13) qui fait que l'eau froide et l'eau chaude affluant lors de l'entrée dans la chambre de mélange (7) n'arrivent pas directement sur l'organe thermostatique (8).

2. Mitigeur avec thermostat selon la revendication 1, caractérisé en ce que l'organe de réglage (5) est conçu en deux parties de telle sorte que lors de l'assemblage de ces parties, le bord intérieur de la membrane (14) soit serré entre les parties.
